Europäisches Patentamt

European Patent Office

Office européen des brevets

(11) Publication number: **0 087 527**
**B1**

# EUROPEAN PATENT SPECIFICATION

(45) Date of publication of patent specification: 02.04.86

(51) Int. Cl.⁴: **B 29 C 51/06** // B29L22/00

(21) Application number: **82301002.0**

(22) Date of filing: **26.02.82**

(54) **Method of making a plastic hollow article.**

(43) Date of publication of application:
**07.09.83 Bulletin 83/36**

(45) Publication of the grant of the patent:
**02.04.86 Bulletin 86/14**

(84) Designated Contracting States:
**DE FR GB IT NL SE**

(56) References cited:
**CH-A- 466 554**
**CH-A- 467 144**
**CH-A- 504 948**
**DE-A-1 679 993**
**DE-B-2 428 578**
**FR-A-1 182 969**
**GB-A-1 184 647**
**US-A-3 184 524**
**US-A-3 510 913**
**US-A-3 661 489**

(73) · Proprietor: **TOYO SEIKAN KAISHA LIMITED**
**3-1, Uchisaiwai-cho 1-chome Chiyoda-ku**
**Tokyo (JP)**

(72) Inventor: **Kawaguchi, Kiyoshi**
**3359-9 Shinyoshidacho Kouhoku-ku**
**Yokohama-city Kangawa Prefecture (JP)**
Inventor: **Yamada, Muneki**
**3764-1 Ishikawa**
**Fujisawa-city Kangawa Prefecture (JP)**
Inventor: **Kato, Nobuyuki**
**25 Sachigaoka Asahi-ku**
**Yokohama-city Kanagawa Prefecture (JP)**
Inventor: **Kanou, Fumio**
**940-52 Matsumi-cho 3-chome Kanagawa-ku**
**Yokohama-city Kanagawa Prefecture (JP)**
Inventor: **Sakamoto, Akira**
**25 Sachigaoka Asahi-ku**
**Yokohama-city Kanagawa Prefecture (JP)**
Inventor: **Mitsuhashi, Minoru**
**37-18 Todoriki 2-chome**
**Setagaya-ku Toyko (JP)**

(74) Representative: **Woodcraft, David Charles et al**
**BROOKES & MARTIN High Holborn House 52/54**
**High Holborn**
**London, WC1V 6SE (GB)**

Courier Press, Leamington Spa, England.

## Description

The present invention relates to a method of making a plastic hollow article and, more particularly, to a method which is particularly suitable for making a can-shaped plastic hollow article such as a container having a molecularly oriented thin sidewall portion and a large ratio of the height to the diameter.

There is disclosed in U.S. Patent No. 3,184,524 a method of producing a can-shaped plastic hollow article having a molecular oriented sidewall portion with improved transparency, strength, and gas barrier. This method comprises the steps of molding a preform of an orientable synthetic plastic material; clamping the preform about its periphery adjacent to one end of a mold cavity; displacing the center portion of the preform inwardly of the mold cavity relative to the clamped periphery thereof while simultaneously applying compressive pressure thereto to effect lateral flow of the plastics material in the center portion, and to provide synthetic plastics material in the wall portion being formed between the clamped periphery and the displacing center portion during formation of the wall portion; and applying pressure to the interior of the preform, after the displacement of the center portion, to expand the preform into conformity with the wall of the mold cavity to form a hollow article, the displacement and pressure applications being conducted below the molten temperature, and at orientation temperatures of the synthetic plastics material to effect molecular orientation during the displacement, lateral flow and expansion of the preform material.

According to this method, the preform is an injection-molded one, and of general dish-shaped configuration, having a thick center or bottom wall portion, a thin sidewall portion, and a thin peripheral flange portion; the compressive pressure is uniform during the full period of inward displacement of the center portion.

However, in cases where preforms of complicated configuration (as mentioned above) are made by injection molding, there have arisen problems such that the cost for making preforms is high, and it is difficult to heat the above preforms uniformly and without getting out of shape to the orientation temperature before forming, since the thickness of the preform is not uniform over its area.

Moreover, although a laminate preform has to be employed if it is desired to make a hollow article of laminated structure, it is very difficult to make the laminate preform by injection molding.

In cases where the compressive pressure applied to the center portion of the preform is uniform during the full period of inward displacement of the center portion, as is the case with the prior art, there will arise a problem that it is difficult to make a can-shaped hollow article having a thin sidewall portion and a large ratio of height to diameter, since the corner portion between the sidewall portion and the bottom wall portion becomes very thin, and tends to rupture.

According to the present invention, there is provided a method of making a plastic hollow article having a flange portion, a sidewall portion and a bottom wall portion, at least the sidewall portion being molecularly oriented, the method comprising the steps of clamping a peripheral portion against a die surface which extends generally radially from the open end of a cavity of a die; the peripheral portion corresponding to the flange portion of a molecularly orientable plastic material stock having a temperature below the upper limit of the molecularly orientable temperatures of the plastic material; introducing the central portion of the plastic material stock into the die cavity, while compressing said central portion with a first plunger and a second plunger opposing the first plunger, to form a hollow preform having a sidewall portion made from the plastic material which has been forced out from between the first plunger and the second plunger, the central portion substantially corresponding to the bottom wall portion, the die cavity having a substantially straight, axially-extending inside surface with a clearance between said inside surface and a side surface of the first plunger which is larger than the thickness of the sidewall portion of the hollow preform; and supplying a fluid under pressure into the hollow preform to expand radially the sidewall portion, so that the sidewall portion is brought into contact with the inner surface of the die cavity kept at a temperature below the lower limit of said molecularly orientable temperatures for cooling and solidifying, whereby the sidewall portion of the plastic hollow article is formed from the sidewall portion of the hollow preform, characterised in that the plastic material stock is flat and of a substantially uniform thickness; said introducing is performed such that the compressing force of the first plunger and the second plunger is kept comparatively high in the initial stage of introducing the plastic material stock into the die cavity, thereby causing the plastic material to be forced out to fill substantially the space between the first plunger and the inner surface of the die cavity, and thereafter the compressing force is reduced and said introducing is continued, thereby permitting the filled plastic material to be drawn in the axial direction with the first plunger.

Using this method, it is possible to make a can-shaped plastic hollow article having a thin sidewall portion with improved transparency, gas barrier, and other container properties resulting from molecular orientation, and having a large ratio of the height to the diameter, from a plastic material stock of simple configuration and of low forming cost with little possibility of rupture.

The invention will now be described in greater detail, by way of example, with reference to the accompanying drawings, in which:—

Figure 1 is a schematic vertical section view showing an example of the device used for practicing the invention;

Figure 2 is a vertical sectional view showing the device as shown in Figure 1 which illustrates the state immediately prior to forming a plastic hollow article;

Figure 3 is a transverse sectional view along the line III—III in Figure 2;

Figure 4 is a vertical sectional view showing the device as shown in Figure 1 which is in the former stage of forming;

Figure 5 is a vertical sectional view showing the device as shown in Figure 1 which is in the stage of having finished the forming of a hollow preform by compression and drawing;

Figures 6, 7, and 8 are vertical sectional views showing the device as shown in Figure 1 which are in the stages of just before blow molding, during blow molding, and having finished blow molding, respectively;

Figure 9 shows schematic vertical sectional views of the constituents of a plastic material stock placed one over another;

Figure 9 (a) shows a plastic material stock composed of plastic sheets of different kinds;

Figure 9 (b) shows a plastic material stock composed of plastic sheets and laminates;

Figure 9 (c) shows a plastic material stock composed of laminates;

Figure 9 (d) shows a plastic material stock composed of plastic sheets of the same kind;

Figure 10 shows vertical sectional views illustrating the important part of the first example of the device which is capable of forming the thin flange portion;

Figure 10(a) shows the device which is in the stage before compressing the flange portion; ·

Figure 10 (b) shows the device which is in the stage after forming the thin flange portion by compression;

Figure 11 shows vertical sectional views illustrating the important part of the second example of the device which is capable of forming the thin flange portion;

Figure 11 (a) shows the device which is in the stage before compressing the flange portion;

Figure 11 (b) shows the device which is in the stage after forming the thin flange portion by compression;

Figure 12 shows vertical sectional views illustrating the important part of the device which is capable of forming a flange portion having a predetermined sectional configuration;

Figure 12 (a) shows the device which is in the stage before compressing the flange portion;

Figure 12 (b) shows the device which is in the stage after shaping the flange portion by compression.

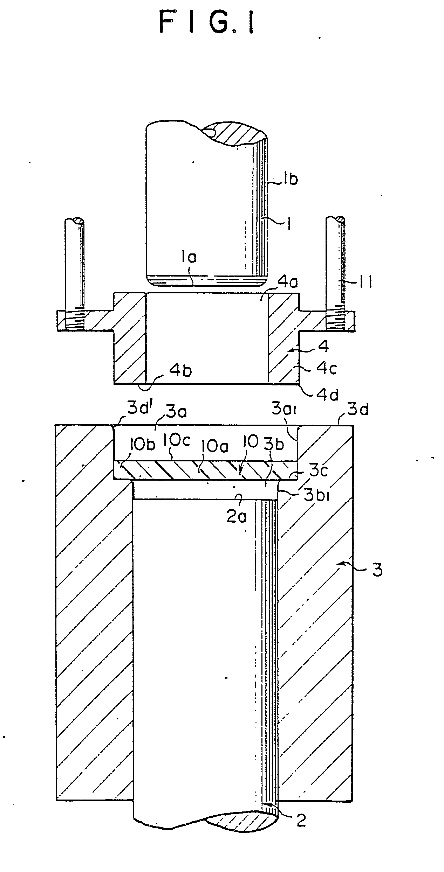

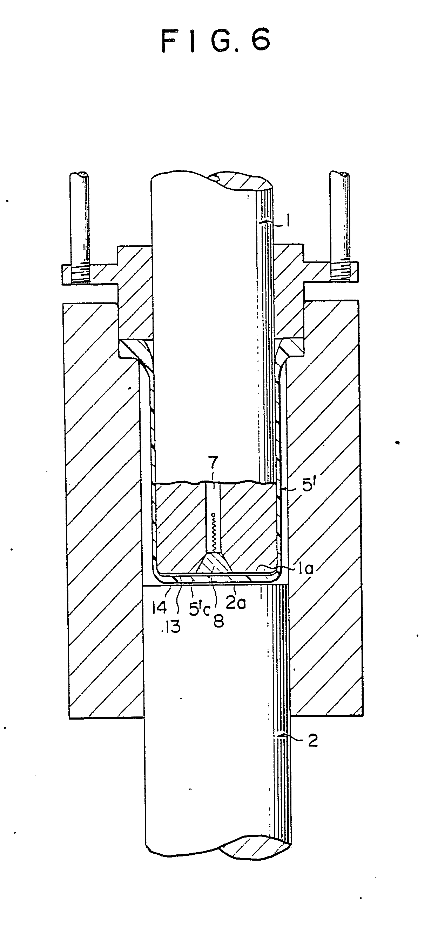

Referring first to Figures 1 to 7 of the attached drawings, therein illustrated are an upper plunger 1, a lower plunger 2, a die 3, and a clamping pad 4. The die 3 is fixed to a holding member which is not shown. As shown in Figure 1, the die 3 has an upper cavity 3a and a lower cavity 3b. The upper cavity 3a is of a short cylindrical shape and has an inside diameter which is approximately equal to the outside diameter of the flange portion 5a of a plastic hollow article 5 to be formed (refer to Figure 6). The lower cavity 3b is of a cylindrical shape and has an inside diameter which is equal to the outside diameter of the sidewall portion 5b of the plastic hollow article 5 to be formed. The inside surface $3a_1$ of the upper cavity 3a is connected to the inside surface $3b_1$ of the lower cavity 3b through a horizontal step 3c.

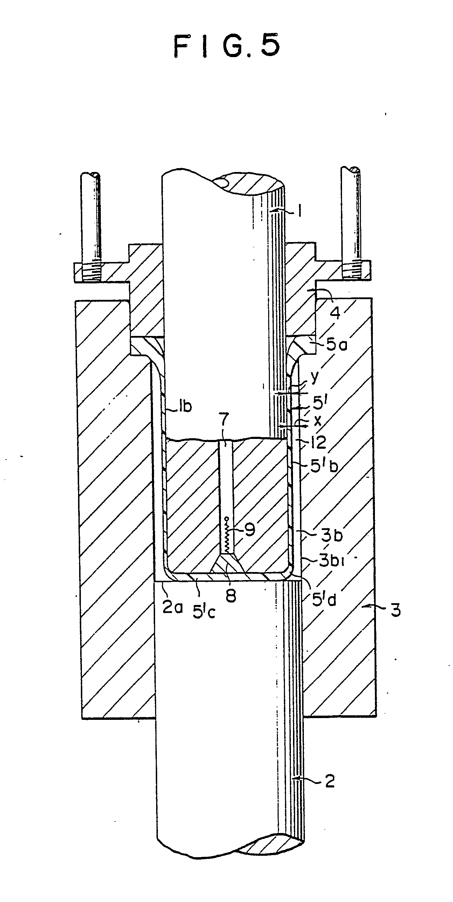

The outside diameter of the upper plunger 1 is dimensioned such that the clearance x between the upper plunger 1 and the inside surface $3b_1$ of the lower cavity 3b is greater than the wall thickness y of the sidewall portion 5'b of the hollow preform 5' to be formed (refer to Figure 5). The difference between x and y is, for example, 0.2 to 0.8 mm. The upper plunger 1 is provided with a bore 7 extending along the axial direction. The lower opening of the bore 7 is ordinarily kept closed by a plug 8 of truncated conical shape which is adapted to be usually pulled upwardly by a spring 9 (refer to Figure 5). The bore 7 communicates through a conduit and an electromagnetic valve (not shown) with a source of compressed air (not shown). These elements are so arranged that the electromagnetic valve is opened by a limit switch (not shown) when the bottom surface 1a of the upper plunger 1 is positioned approximately below the step 3c of the die 3, and the compressed air is supplied through the bore 7. The upper plunger 1 is made of metal (such as tool steel), and preferably has a smooth, surface-treated hard layer (such as hard chrome plated layer) thereon. Further, the upper plunger 1 has a built-in heater (not shown) which keeps at least the bottom surface 1a and the side surface 1b up to the height about equal to that of the sidewall portion 5b of the plastic hollow article 5 to be formed, at an approximate molecularly orientable temperature of the plastic material composing the hollow article 5.

The lower plunger 2 is constructed in such a manner that it is slidable along the lower cavity 3b. The top surface 2a is preferably coated with a smooth, surface-treated hard layer so that the plastic material is forced out easily by compression, as mentioned hereinafter. The clamping pad 4 has a hollow portion 4a, and the upper plunger 1 is adapted to slide along the inside surface of the hollow portion 4a. The clamping pad 4 has a flat bottom surface 4b that faces the step 3c. The lower portion 4c of the clamping pad 4 has an outside diameter which is equal to or slightly smaller than the inside diameter of the upper cavity 3a, so that the lower portion 4c can move vertically in the upper cavity 3a. The clamping pad 4 is moved vertically through rods 11 by a driving mechanism such as a hydraulic unit (not shown).

The upper plunger 1 and the lower plunger 2 are also moved vertically by a driving mechanism such as a hydraulic unit (not shown). In downward movement, the difference between the speeds of the upper plunger 1 and the lower plunger 2 is controlled by a control mechanism (not shown), so that a controlled compression force is applied to the central portion 10a of a plastic material stock 10 when it is held between

the bottom surface 1a of the upper plunger 1 and the top surface 2a of the lower plunger 2 and is introduced into the lower cavity 3b.

The plastic material stock 10 is made of a molecularly orientable synthetic thermoplastic. Examples of such a thermoplastic include crystalline polyolefin resins such as isotactic polypropylene, high-density polyethylene, medium-density polyethylene, and low-density polyethylene; linear polyester resins such as polyethylene terephthalate; polycarbonate; polyvinyl chloride; nitrile resin; and copolymers or blends thereof. In case where the intended plastic hollow article does not need transparency, the plastic material may be incorporated with a filler such as talc, calcium carbonate, and mica flakes. The plastic material stock 10 is prepared by cutting to a predetermined size a sheet of the molecularly orientable thermoplastic material, or a laminate sheet or a blend sheet composed of the molecularly orientable thermoplastic material and an oxygen barrier resin such as ethylene-vinyl alcohol copolymer, polyamide, cellulosic resin, polyacrylonitrile, polyvinylidene chloride, and polyvinyl alcohol. The plastic material stock 10 has a substantially uniform thickness, preferably from about 0.5 to 6 mm, more preferably from about 2 to 4 mm. If it is thinner than about 0.5 mm, when the hollow preform 5' is formed, breakage tends to occur, particularly at the bottom portion thereof. On the other hand, if it is thicker than about 6 mm, breakage tends to take place near the flange portion of the hollow preform 5'.

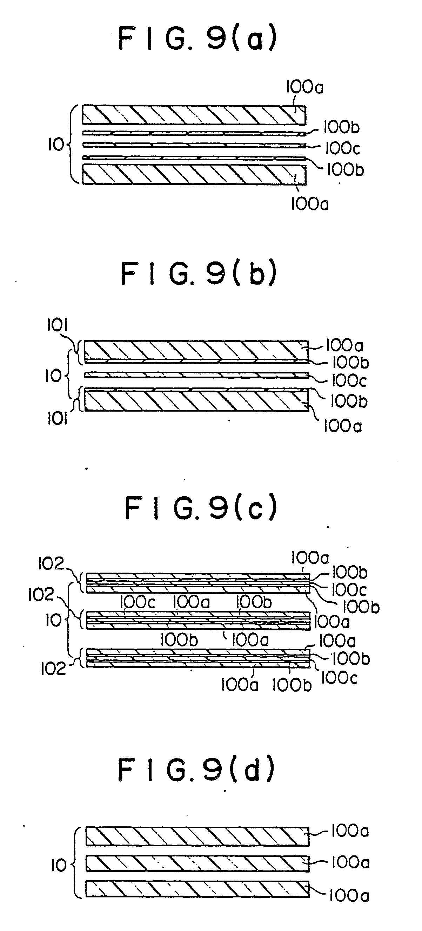

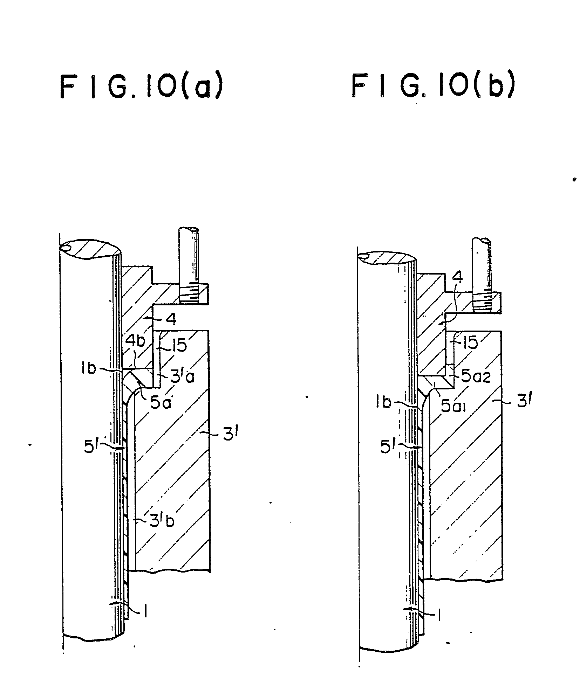

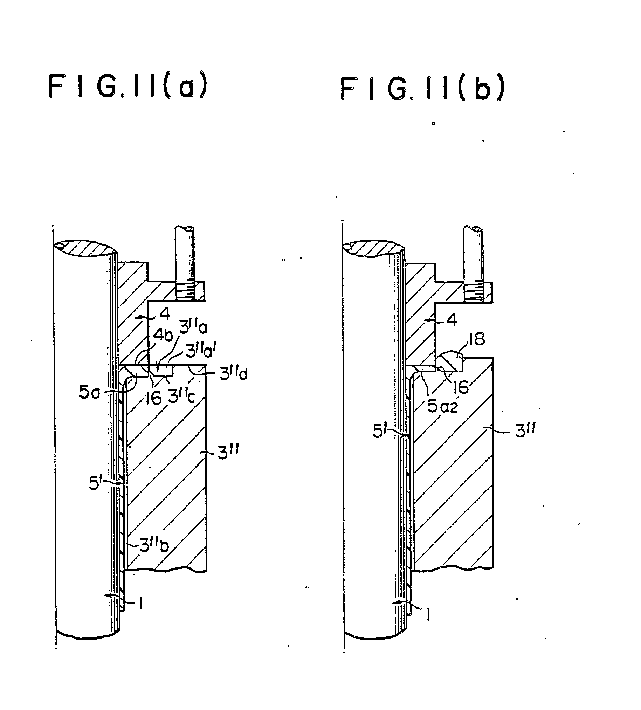

In case where laminates are used as the stock, they are usually bonded by adhesive layers into an integral sheet. In this invention, however, it is not always necessary to make an integral laminate sheet. The plastic material stock 10 may be composed of multiple layers of a molecularly orientable thermoplastic sheet 100a (such as polypropylene sheet 500 to 2000 μm thick), an adhesive sheet of film 100b (such as maleic anhydride-modified polypropylene film 50 to 150 μm thick), an oxygen barrier thermoplastic sheet or film 100c (such as ethylene-vinyl alcohol copolymer film 200 to 400 μm), the adhesive sheet or film 100b, and the molecularly orientable thermoplastic sheet 100a, which are simply placed one over another without bonding, as shown in Figure 9 (a) (in which the gaps between the layers are exaggerated for illustration, and in actuality there are almost no gaps). The reason why the constituting layers need not to be bonded together is that they are bonded completely, except the flange portion 5a, during the process in which the plastic material at the molecularly orientable temperature thereof is compressed between the upper plunger 1 and the lower plunger 2 and forced out along the side surface 1b of the upper plunger 1. Presumably, this bonding is caused by slipping under pressure between the layers at the molecularly orientable temperature. This bonding also takes place in the flange portion 5a when the layers are compressed in the manner as shown in Figure 10 and Figure 11 mentioned later.

The use of the plastic material stock of the multiple layers as mentioned above has the following advantages. (a) Waste after cutting (or punching) the stock can be recovered. (b) Troubles encountered in thick laminates, for example, 2 to 6 mm thick can be avoided. The production of thick laminates by, for instance, melt coextrusion tend to cause troubles such as difficulty in winding-up, low production speed due to a low cooling rate, and poor formability due to the increase in the size of microcrystallines. (c) Preheating time can be reduced where the plastic hollow article is formed from a preheated plastic material stock.

Alternative examples of the plastic material stock 10 are shown in Figure 9. In Figure 9 (b), the plastic material stock 10 is composed of an oxygen barrier plastic sheet or film 100c sandwiched by two pieces of laminates 101, each composed of a molecularly orientable thermoplastic sheet 100a and an adhesive sheet or film 100b. In Figure 9 (c), the plastic material stock 10 is prepared by simply placing a plurality (3 in the figure) of comparatively thin laminates 102 one over another. In this case also, the bonding in the process of forming the hollow preform is achieved, as mentioned above, and the aforesaid merits (b) and (c) are obtained. Similarly, it is also possible to use the plastic material stock 10 prepared by simply placing a plurality (3 in the figure) of comparatively thin molecularly orientable thermoplastic sheets 100a as shown in Figure 9 (d) one over another.

The diameter of the plastic material stock 10 is dimensioned such that the plastic material stock 10 can be placed on the step 3c and clamped by the clamping pad 4, with a predetermined width of the flange portion 5a. In other words, the diameter is approximately equal to the inside diameter of the inside surface $3a_1$ of the upper cavity 3a, or equal to an intermediate value of the above inside diameter and the inside diameter of the inside surface $3b_1$ of the lower cavity 3b.

The plastic material stock 10 is charged into the upper cavity 3a as shown in Figure 1, preferably at normal room temperature (usually 10 to 40°C) without preheating, and then formed. However, it may be formed after uniformly preheating to a prescribed temperature lower than the upper limit (Tu) of the molecularly orientable temperatures. The upper limit Tu means the melting point (defined in this specification as the peak temperature of the endothermic curve measured by differential thermal analysis under atmospheric pressure) in the case of crystalline thermoplastics such as isotactic polypropylene, and high-, medium-, and low-density polyethylene; a cold crystallization temperature in the case of crystalline thermoplastics such as polyethylene terephthalate having the cold crystallization temperature; and a melt flow starting temperature (defined in this specification as the temperature at which the sample resin starts to be discharged in melt from a nozzle, 1 mm in diameter and 10 mm long, when heated at a constant rate, under a plunger pressure of 160 kg/cm$^2$ using a Koukashiki flow tester specified in JIS K 6719) in the case of amorphous plastics such as polyvinyl chloride, nitrile resin, and polycarbonate.

The plastic material stock 10 may be also fed in the following manner. A sheet emerging from a sheet extrusion molding (die) not shown is cooled by cooling roll to a prescribed temperature as mentioned above. Then the sheet is placed on the top surface 3d of the die 3. The clamping pad 4, which is used as a punching die also in this case, is lowered. The plastic material stock 10 is punched out from the sheet by the lower corner 4d of the pressure pad 4 and the opening corner 3d' of the upper cavity 3a of the die 3 (although the opening corner 3d' is curved in Figure 1, it should be angular (not shown) when it is used as a punching die). The plastic material stock 10 thus punched is placed on the step 3c.

The plastic material stock 10 may be formed without preheating into the hollow preform 5' which, except the flange portion, is kept at molecularly orientable temperature during the forming process in the case illustrated in Figures 1 to 5. One reason for this is that heat is generated when the central portion 10a of the plastic material stock 10 is compressed by the upper plunger 1 and the lower plunger 2. Another reason is that, during the forming process, the sidewall portion and the bottom wall portion of the hollow preform 5' come into contact with the sidesurface 1b and the bottom surface 1a of the upper plunger 1, which is kept an approximate molecularly orientable temperature $(T_1)$, which ranges from the temperature about 20°C lower than the lower limit $(T_L)$ of the molecularly orientable temperatures to the temperature about 60°C higher than the upper limit (Tu) of the molecularly orientable temperatures, preferably from the temperature about 20°C higher than the lower limit $(T_L)$ to the temperature about 20°C higher than the upper limit (Tu). The forming may preferably be carried out without preheating the plastic material stock 10, whereby an apparatusand a step for preheating can not be required.

The molecularly orientable temperature (To) as defined in this specification means a temperature at which the polymer chains of the molecularly orientable plastic material forming at least the sidewall portion 5b of the plastic hollow article 5 to be formed according to the method of this invention are oriented more than the orientation that would take place in the ordinary melt molding, with the result that the plastic hollow article 5 is improved in physical strength, gas barrier properties, and transparency and so forth. In the case of isotactic polypropylene, the temperature (To) is lower than the melting point thereof and higher than about 120°C. In the case of linear polyester resins such as polyethylene terephthalate, the temperature is higher than the glass transition temperature thereof and lower than the cold crystallization temperature thereof. In the case of amorphous resins such as polyvinyl chloride, nitrile resin, and polycarbonate, the temperature (To) is higher than the glass transition temperature and lower than the melt flow starting temperature. In the case of a laminate or multiple layers of polyolefin and ethylene-vinyl alcohol copolymer, the temperature (To) is lower than the melting point of the polyolefin resin and higher than (1.64M + 20)°C (where M is the mol% of vinyl alcohol in the copolymer).

The plastic hollow article 5 is formed in the following manner using the above-mentioned forming apparatus.

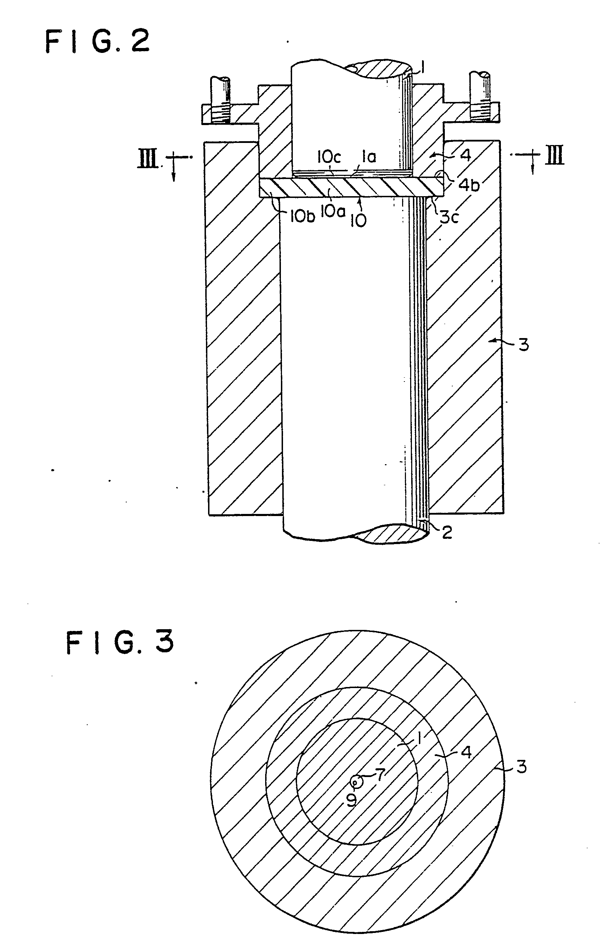

The plastic material stock 10 is placed on the step 3c of the die 3, with the upper plunger 1 and the clamping pad 4 raised above the die 3, as shown in Figure 1. In case where the plastic material stock 10 is preheated to a comparatively high molecularly orientable temperature, it is preferable to position the top surface 2a of the lower plunger 2 at the same level as the step 3c in order to prevent the central portion 10a of the plastic material stock 10 from sagging due to softening. Then, as shown in Figure 2, the pressing pad 4 is lowered, and the peripheral portion 10b of the plastic material stock 10 is clamped under a prescribed pressure between the step 3c and the bottom surface 4b of the clamping pad 4. The clamping force, at least before the bottom surface 1a of the upper plunger 1 comes into contact with the top surface 10c of the plastic material stock 10, should be kept at such a value that the plastic material of the peripheral portion 10b is not compressed to an extent that radially inward material flow occurs, and the peripheral portion 10b can be held on the step 3c. If the clamping force is so great that the material is forced to flow radially inwardly, breakage often will occur near the boundary between the flange portion and the sidewall portion of the hollow preform 5', presumably due to excessive shear strength applied to the plastic material by the lowering upper plunger 1.

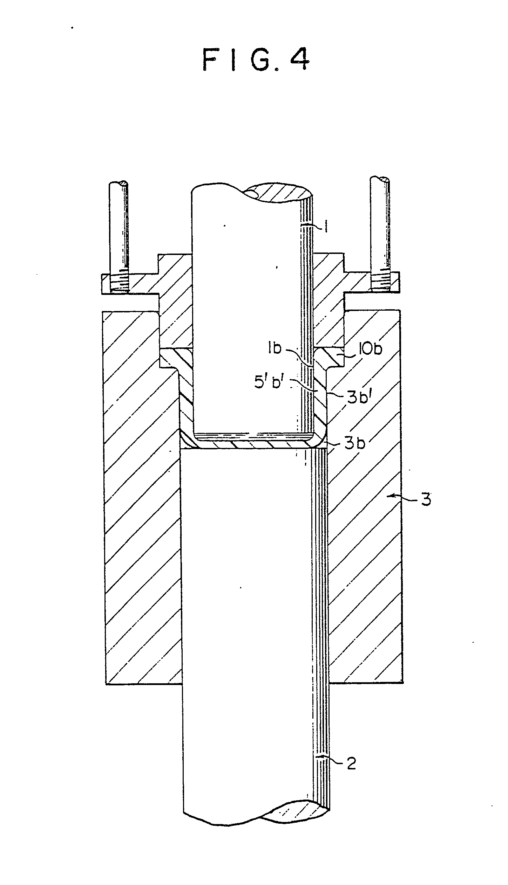

After clamping, the upper plunger 1 and the lower plunger 2 are brought into contact with the central portion 10a of the plastic material stock 10, as shown in Figure 2. Then, the upper plunger 1 and the lower plunger 2 compressing the central portion 10a are moved together downward into the lower cavity 3b, as shown in Figure 4. In the former stage of the downward movement (usually to about 20 to 40% of the total stroke), the compressing force is kept relatively high so that the material of the central portion 10a is forced out of between the two plungers, and the plastic material thus forced out fills the space between the inside surface 3b' of the lower cavity 3b and the side surface 1b of the upper plunger 1, thus forming the sidewall portion 5'b', as shown in Figure 4. In other words, in the former stage of the downward movement, the plastic material is accumulated in the aforesaid space. Following the former stage of the downward movement, the two plungers continue to move downward with a decreased compressing force, so that the amount of the plastic material which is forced out of between the two plungers decreases. As the result, the plastic material forming the sidewall portion 5'b' is subjected to tension and the sidewall portion 5'b' is drawn in the axially direction. Thus, in the later stage (following the former stage) of the downward movement, the sidewall portion 5'b is formed with the material which is supplied by drawing the sidewall portion 5'b', and the material which is forced out of between the two plungers in the later stage.

On completion of the downward movement, or at the time when the hollow preform 5' has been formed, a gap 12 is formed between the sidewall portion 5'b and the inside surface $3b_1$ of the lower cavity 3b. Thus, the sidewall portion 5'b of substantially uniform thickness can be formed by suitably controlling the compressing force and the rate of downward movement. In this manner, it is possible to produce the sidewall portion 5'b as thin as 0.1 to 0.2 mm. In the later stage of the downward movement, the compressing force is comparatively low as mentioned above, and consequently, the bottom wall portion 5'c is relatively thick (for example, about 1 mm), and the corner 5'd is prevented from breakage due to tension in the forming process. If the compressing force is kept high until the later stage of the downward movement, the bottom wall portion 5'c is thinned or the corner 5'd is thinned, with the resulting breakage. Even in case where no breakage takes place, if the resulting plastic hollow article 5 is thin (especially less than 0.3 mm) in bottom wall thickness, it tends to undergo thermal deformation, forming wrinkles at the corner 5d when it is retort sterilized after it has been hermetically sealed. That the bottom wall portion 5c is thin (less than about 1 mm) tends to result in the decrease of resistance to deformation caused by an external force directed inwardly radially, of the plastic hollow article 5. In addition, it involves a problem that the bottom wall portion 5c swells when the plastic hollow article 5 is retort sterilized. If the downward movement is performed with a comparatively low compression force from its beginning, the amount of the plastic material for the sidewall portion, which is supplied only from the plastic material corresponding to the central portion 10a between the two plungers, will become short for the given speed of downward movement. This causes the sidewall portion to be subjected to a large tension, resulting in breakage of the sidewall portion when it is low in temperature during the forming process, or whitening of the sidewall portion owing to microcracks generated on the surface layer thereof when it is high in temperature during the forming process.

During the downward movement, the plastic material which forms the bottom wall portion 5c and the sidewall portion 5b is in contact with the upper plunger 1 which is kept at an approximate molecularly orientable temperature $(T_1)$, and, in addition, the plastic material rises in temperature due to working heat. Therefore, the plastic material can be kept at a molecularly orientable temperature thereof during forming even though the plastic material stock 10 is not preheated. The approximate molecularly orientable temperature $(T_1)$ means, as stated before, a temperature which is higher than a temperature about 20°C lower than the lower limit of $(T_L)$ the molecularly orientable temperatures and is lower than a temperature about 60°C higher than the upper limit (Tu) of the molecularly orientable temperature, preferably a temperature which is higher than a temperature about 20°C higher than the lower limit $(T_L)$ and is lower than a temperature about 20°C higher than the upper limit (Tu). If $T_1$ is about 20°C or more lower than $T_L$ and the plastic material stock 10 is not preheated, it is difficult for the plastic material under forming to rise in temperature up to the molecularly orientable temperature. On the other hand, if $T_1$ is about 60°C or more higher than Tu, the plastic material under forming exceeds in temperature the molecularly orientable temperature, regardless of preheating. This is not preferable. Even in case where $Tu < T_1 \leq Tu + $ about 60°C, it is possible to keep the plastic material under forming at a molecularly orientable temperature, if the forming speed is large, since the plastic material is in contact with the upper plunger 1 in only a short time.

During the forming process, the inside surface $3b_1$ of the lower cavity 3b and the top surface 2a of the lower plunger 2 are preferably heated by a built-in heater (not shown) to a temperature which is somewhat (usually about 20 to 50°C) lower than the lower limit $(T_L)$ of the molecularly orientable temperature, for example, in the case of polypropylene, to about 70 to 100°C. If the temperature of the inside surface $3b_1$ and the top surface 2a is lower than the above-mentioned temperature, it will be difficult to keep the plastic material under forming at the molecularly orientable temperature thereof.

After the hollow preform 5' has been formed, the upper plunger 1 is moved upward and, preferably, the lower plunger 2 is simultaneously moved downward a little (for example, about 5 mm). The reason for this is given below. When the upper plunger 1 has just been raised, the plug 8 still keep closing the opening of the bore 7 due to time lag, as shown in Figure 6. Therefore, vacuum occurs in the gap 13 formed between the bottom surface 1a of the upper plunger 1 and the bottom wall portion 5'c. This vacuum tends to deform inwardly the bottom wall portion 5'c which is still at molecularly orientable temperature. This vacuum force is offset when the lower plunger 2 is lowered a little, because vacuum occurs also in the gap 14 formed between the bottom wall portion 5'c and the top surface 2a of the lower plunger. Thus, the pressures above and below the bottom wall portion 5'c are balanced, and the aforesaid deformation can be prevented.

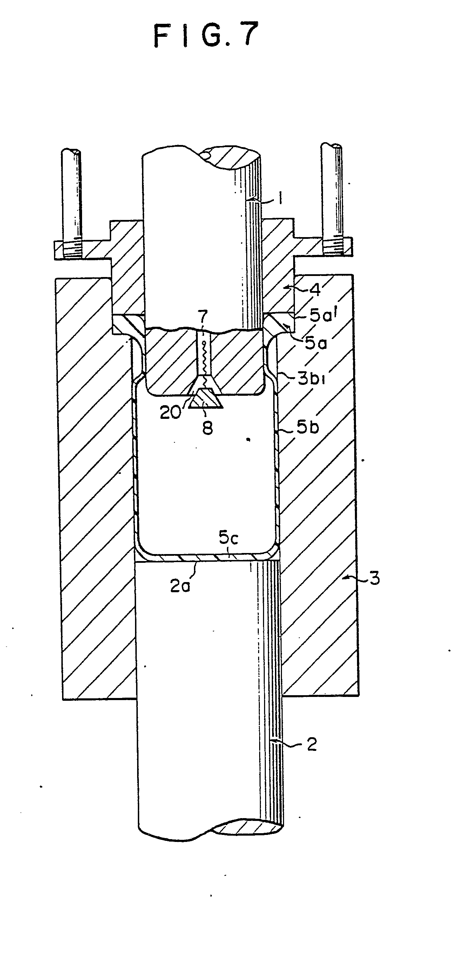

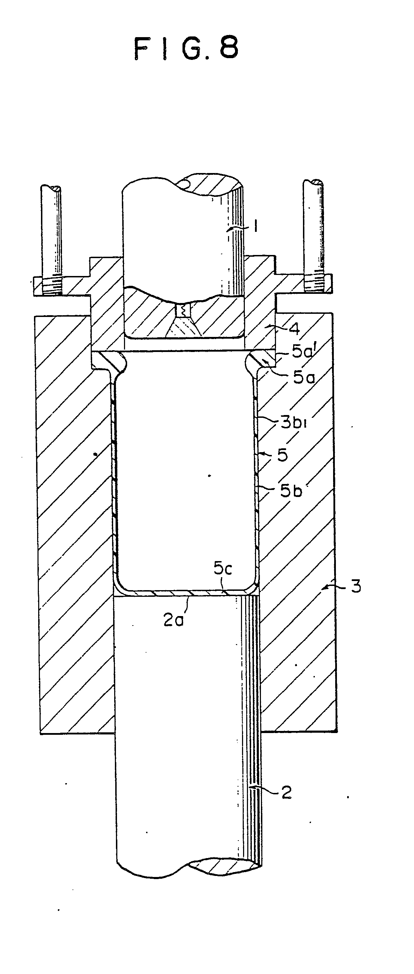

As the upper plunger 1 is further moved upward, the plug 8 is forced down by air pressure, as shown in Figure 7. Compressed air is blown through the gap 20 between the plug 8 and the opening of the bore 7. This compressed air accomplishes blow molding of the hollow preform 5'. Namely, the bottom wall portion 5'c is brought into close contact with the top surface 2a of the plunger 2, and the sidewall portion 5'b is brought into close contact with the inside surface $3b_1$ of the lower cavity. As the result, they are cooled to a temperature lower than the molecularly orientable temperature, and solidified. Thus, the plastic hollow article 5 having the flange portion 5a, the sidewall portion 5b, and the bottom wall portion 5c is formed, as shown in Figure 8. Thereafter, the upper plunger 1 continues to move upward, and the clamping pad 4 and the lower plunger 2 are moved upward. Finally, the plastic hollow article 5 is removed from the die 3.

The plastic hollow article 5 thus obtained can have a large ratio of the height to the diameter (the outside diameter of the sidewall portion 5b), for example, of about 1.5 to 3, the sidewall portion 5b of thin and uniform thickness (about 0.1 to 0.3 mm), and improved container properties such as strength, transparency and gas barrier due to molecular orientation. Needless to say, according to the method of this invention, it is possible to produce the plastic hollow article 5 having the sidewall portion 5b as thick as about 0.4 to 1.0 mm where necessary.

The plastic hollow article 5 produced as mentioned above usually has a considerably thick (about 2 to 6 mm) flange portion 5a, which is substantially as thick as the plastic material stock 10 used. In addition, the side surface 5a' of the flange portion 5a (in Figure 8) remains almost as rough as it was when the plastic material stock 10 was punched. Such a thick and rough flange is inconvenient for double seaming a metal lid (not shown) or for clinching a metal cap (not shown). In addition, in cases where a lid made of plastic sheet or film (including a laminate with a metal foil) is heat-sealed, the appearance of the side surface 5a' is poor. Where it is desirable to avoid the foregoing drawbacks, the following measures may be taken.

Referring now to Figure 10 and Figure 11, there are shown sectional views illustrating the methods for thinning the flange portion 5a. In Figure 10 (a), the inside diameter of the upper cavity 3'a of the die 3 is a little greater than the outside diameter of the clamping pad 4 so that the gap 15 is formed. The bottom surface 4b of the clamping pad 4 is heated by a built-in heater (not shown) to a temperature almost equal to that of the side surface 1b of the upper plunger 1. If the clamping pad 4 is allowed to compress the flange portion 5 after the upper plunger 1 has finished its downward movement, the plastic material forming the flange portion 5a is forced into the gap 15 as shown in Fig. 10(b). In this specification, the flow of the material in the gap 15 is also referred to as the flow in the radial, outward direction. In this manner, it is possible to form the flange portion $5a_1$ having a prescribed thickness and the vertical portion $5a_2$ extending from the flange

portion $5a_1$. The vertical portion $5a_2$ is cut off from its base. If the gap 15 is wide or the compression is small, the vertical portion $5a_2$ may not be formed. The compression by the clamping pad 4 may be performed, before the upper plunger 1 is moved downward, or while moving downward, in the lower cavity 3'b.

In Figure 11 (a), the top surface 3"d of the die 3" is at almost the same level as the bottom surface 4b of the clamping pad 4, and the outside diameter of the upper cavity 3"a is much greater than the outside diameter of the bottom surface 4b and flange portion 5a (both are almost the same). The step 3"c is provided with a small annular wedge-shaped protrusion 16 which surrounds the flange 5a. The height of the small protrusion 16 is about equal to the height of the flange portion $5a_2$ after compression. When the clamping pad 4 is allowed to compress the flange 5a after the upper plunger 1 has finished its downward movement, the plastic material is forced into the upper cavity 3"a' outside the small protrusion 16. The plastic material which has entered the upper cavity 3"a' can be easily separated from the thin-walled flange portion $5a_2$. As in the case of Figure 10, this compression can be accomplished, before the upper plunger 1 is moved downward, or while the upper plunger 1 is moving downward, in the lower cavity 3"b.

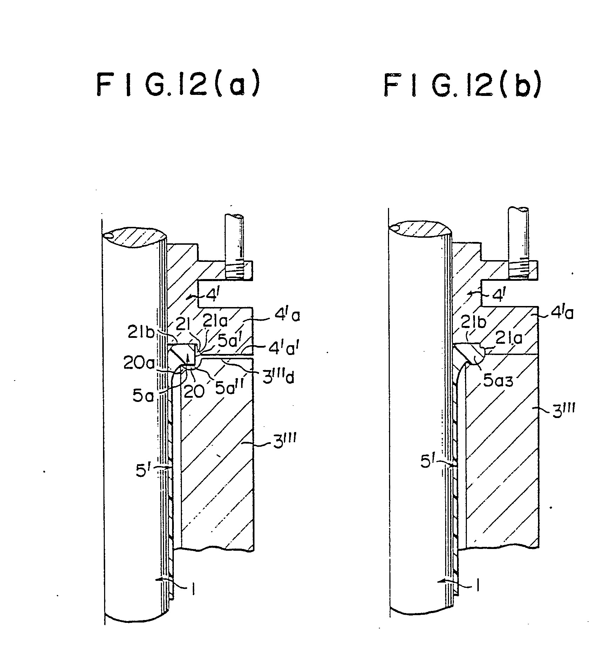

Figure 12 shows a device for shaping the side surface 5a' and bottom surface 5a" of the flange portion 5a. As shown in Figure 12 (a), a recess 20 of the shape corresponding to the lower half portion of the shaped flange portion $5a_3$ is formed on the inside portion of the top surface 3'''d of the die 3''', and the recess 20 is provided at its innermost side with a protrusion 20a which clamps the flange portion 5a (that is, the peripheral portion 10b). The clamping pad 4' is provided with a flange portion 4'a. At the inside portion of the bottom surface 4'a' of the flange portion 4'a is formed a recess 21 having the side 21a of the shape corresponding to the upper half portion of the shaped flange portion $5a_3$. The upper surface 21b of the recess 21 is a plane which is a little wider than the width of the flange portion 5a. When the flange portion 5a is compressed by the clamping pad 4' until the bottom surface 4'a' of the flange portion 4'a of the clamping pad 4' comes into contact with the die 3''', after the upper plunger 1 has finished its downward movement (as in Figure 12), or before the upper plunger 1 is moved downward, or while the upper plunger 1 is being moved downward, it is possible to obtain the flange portion $5a_3$ having the side surface 5a' and the bottom surface 5a" shaped as shown in Figure 12 (b), that is, having a predetermined sectional configuration.

The flange portion 5a may be thinned by compressing the peripheral portion 10b with the clamping pad 4 with the clamping or pressing force increased while the upper plunger 1 is moving downward in the lower cavity 3b, preferably in the aforesaid later stage of the downward movement, such that the plastic material of the flange portion flows towards the sidewall portion 5′b, using the device of the type shown in Figure 1. The flange portion 5a can also be thinned by compressing the flange 5a with the clamping pad 4 and simultaneously lowering the upper plunger 1 and the lower plunger 2 as much as the increase of the height of the sidewall portion 5′b which has been caused by the above compression, after the hollow preform 5′ has been formed as shown in Figure 5.

In the above cases, although the plastic material of the peripheral portion 10b is compressed and flows radially inwardly, since the compression is performed after the bottom surface 1a of the upper plunger 1 has been brought into contact with the top surface 10c of the plastic material stock 10, rupture at the boundary of the sidewall portion 5′b and the flange portion 5a or its vicinity will not occur. In case where the flange portion is compressed or shaped as mentioned above, the plastic material stock 10 may not necessarily be circular, but it is possible to obtain a circular flange portion from a polygonal (for instance, hexagonal) stock. In these cases of compressing or shaping the flange portion, the bottom surface 4b of the clamping pad 4, or the side surface 21a and the upper surface 21b of the recess 21 of the clamping pad 4′ are kept at a temperature about equal to that of the side surface 1b of the upper plunger 1.

The above-mentioned examples are concerned with the production of plastic hollow articles having a cylindrical sidewall. Needless to say, the method of this invention makes it possible to produce plastic hollow articles having a square or any other section by changing the shapes of the cavity and the plungers.

The central portion of the plastic material stock may be also forced into the die cavity by moving simultaneously the die 3 and the clamping pad 4 upwardly substantially without moving the upper plunger 1 and the lower plunger 2 (except a slight movement resulting from the compression of the stock). Compressed air (or compressed fluid) may be also blown into the hollow preform 5′ through the side surface 1b of the plunger 1, although this method is not shown.

The invention will be illustrated by the following examples.

### Example 1

A plastic material stock was prepared by punching a circular blank of 60 mm in diameter, from a 3 mm thick polypropylene sheet having a melt flow index (measured at 230°C) of 0.9 g/10 min and a melting point (measured by the differential thermal analysis) of 164°C. The device of the type as shown in Figure 1 was heated by the built-in heaters so that the surface temperatures of the upper plunger 1 (of 51.4 mm dia.), the lower plunger 2 (of 53.0 mm dia.), and the lower cavity 3b (of 53.05 mm I.D.) are 155°C, 100°C, and 75°C, respectively.

The polypropylene stock (or blank) at room temperature (30°C) was placed in the upper cavity and then the peripheral portion of the stock was clamped by the clamping pad with a pressure of 10 kg/cm². Thereafter, the central portion of the stock was forced into the lower cavity at a rate of 50 mm/sec by means of the upper plunger and the lower plunger, with a pressure of 1120 kg/cm² applied to the central portion of the stock. The pressure on the central portion of the stock was reduced to 200 kg/cm² when the top surface of the lower plunger came to the position 25 mm apart from the upper end of the lower cavity. The upper plunger and the lower plunger were moved further downward until the top surface of the lower plunger came to the position 100 mm apart from the upper end of the lower cavity.

Then the upper plunger was moved upward and compressed air of 10 kg/cm² was introduced so that the sidewall portion of the hollow preform was separated from the side surface of the upper plunger and pressed against the surface of the lower cavity. In this state, the sidewall portion and the bottom wall portion were cooled and solidified. Thereafter, the clamping pad and the lower plunger were moved upward. There was obtained a highly transparent container having a sidewall portion 0.3 mm thick and 99 mm high.

### Example 2

Two circular blanks of 60 mm in diameter were punched from a 1 mm thick polypropylene sheet having a melt flow index of 0.4 g/10 min and a melting point of 163°C. One circular blank of 60 mm in diameter was punched from a 1 mm thick symmetrical five-layered laminate of A/B/C/B/A construction, where A is a polypropylene layer having a melt flow index of 6 g/10 min and a melting point of 165°C, B is an adhesive layer of maleic anhydride-modified polypropylene having a melting point of 162°C, and C is an oxygen barrier layer about 85 μm thick of ethylene-vinyl alcohol copolymer containing 70 mol% of vinyl alcohol and having a melting point of 182°C. The blanks were preheated to 155°C in an oven.

Using the same device as used in Example 1 (with the upper plunger etc. heated to the same temperature as in Example 1), the preheated blanks were placed in the upper cavity, with the polypropylene blanks outside. The peripheral portion of the blanks (or the stock) was clamped by the clamping pad with a pressure of 10 kg/cm². Thereafter, the central portion of the stock was forced into the lower cavity at a rate of 50 mm/sec by means of the upper plunger and the lower plunger, with a pressure of 320 kg/cm² applied to the central portion of the stock. The pressure on the central portion of the stock was reduced to 90 kg/cm² when the top surface of the lower plunger came to the position 25 mm apart from the upper end of the lower cavity. The upper plunger and the lower plunger were moved further downward until the top surface of the lower plunger came to the position 100 mm apart from the upper end of the lower cavity.

Then the upper plunger was moved upward and compressed air of 10 kg/cm² was introduced so that the sidewall portion of the hollow preform was separated from the side surface of the upper plunger and pressed against the surface of the lower cavity. In this state, the sidewall portion and the bottom wall portion were cooled and solidified. Thereafter, the clamping pad and the lower plunger were moved upward. There was obtained a highly transparent container having a sidewall portion 0.3 mm thick and 99 mm high. The container was outstanding in oxygen barrier. It was found that the sidewall portion and the bottom wall portion were completed bonded together, though the stock consisting of three blanks simply placed one over another was employed.

## Claims

1. A method of making a plastic hollow article (5) having a flange portion (5a), a sidewall portion (5b) and a bottom wall portion (5c), at least the sidewall portion (5b) being molecularly oriented, the method comprising the steps of clamping a peripheral portion (10b) against a die surface (3c) which extends generally radially from the open end of a cavity (3b) of a die (3); the peripheral portion (10b) corresponding to the flange portion (5a) of a molecularly orientable plastic material stock (10) having a temperature below the upper limit of the molecularly orientable temperatures of the plastic material; introducing the central portion (10a) of the plastic material stock (10) into the die cavity (3b), while compressing said central portion (10a) with a first plunger (1) and a second plunger (2) opposing the first plunger, to form a hollow preform (5') having a sidewall portion (5'b) made from the plastic material which has been forced out from between the first plunger (1) and the second plunger (2), the central portion (10a) substantially corresponding to the bottom wall portion (5c), the die cavity (3b) having a substantially straight, axially-extending inside surface with a clearance between said inside surface and a side surface of the first plunger (1) which is larger than the thickness of the sidewall portion (5'b) of the hollow preform (5'); and supplying a fluid under pressure into the hollow preform (5') to expand radially the sidewall portion (5'b), so that the sidewall portion (5'b) is brought into contact with the inner surface $(3b_1)$ of the die cavity (3b) kept at a temperature below the lower limit of said molecularly orientable temperatures for cooling and solidifying, whereby the sidewall portion (5b) of the plastic hollow article (5) is formed from the sidewall portion (5'b) of the hollow preform (5'), characterised in that the plastic material stock (10) is flat and of a substantially uniform thickness; said introducing is performed such that the compressing force of the first plunger (1) and the second plunger (2) is kept comparatively high in the initial stage of introducing the plastic material stock (10) into the die cavity (3b), thereby causing the plastic material to be forced out to fill substantially the space between the first plunger (1) and the inner surface $(3b_1)$ of the die cavity (3b), and thereafter the compressing force is reduced and said introducing is continued, thereby permitting the filled plastic material (5'b') to be drawn in the axial direction with the first plunger (1).

2. A method of making a plastic hollow article (5) as claimed in claim 1, which further comprises the step of compressing the peripheral portion (10b) prior to introducing the central portion (10a) into the die cavity (3b) in such a manner that the plastic material of the peripheral portion (10b) flows substantially radially outwardly, whereby a thin flange portion $(5a_1, 5a_2)$ is formed.

3. A method of making a plastic hollow article (5) as claimed in claim 1, which further comprises the step of compressing the peripheral portion (10b) prior to introducing the central portion (10a) into the die cavity (3b) in such a manner that the plastic material of the peripheral portion (10b) flows substantially radially outwardly, whereby a flange portion $(5a_3)$ having a predetermined sectional configuration is formed.

4. A method of making a plastic hollow article (5) as claimed in claim 1, which further comprises the step of compressing the peripheral portion (10b) during introducing the central portion (10a) into the die cavity (3b) in such a manner that the plastic material of the peripheral portion (10b) flows substantially radially outwardly, whereby a thin flange portion $(5a_1, 5a_2)$ is formed.

5. A method of making a plastic hollow article (5) as claimed in claim 1, which further comprises the step of compressing the peripheral portion (10b) during introducing the central portion (10a) into the die cavity (3b) in such a manner that the plastic material of the peripheral portion (10b) flows substantially radially outwardly, whereby a flange portion $(5a_3)$ having a predetermined sectional configuration is formed.

6. A method of making a plastic hollow article (5) as claimed in claim 1, which further comprises the step of compressing the peripheral portion (10b), after forming the hollow preform (5'), and prior to withdrawing the first plunger (1) to its original position, in such a manner that the plastic material of the peripheral portion (10b) flows substantially radially outwardly, whereby a thin flange portion $(5a_1, 5a_2)$ is formed.

7. A method of making a plastic hollow article (5) as claimed in claim 1, which further comprises the step of compressing the peripheral portion (10b), after forming the hollow preform (5'), and prior to withdrawing the first plunger (1) to its original position, in such a manner that the plastic material of the peripheral portion (10b) flows substantially radially outwardly, whereby a flange portion $(5a_3)$ having a predetermined sectional configuration is formed.

8. A method of making a plastic hollow article (5) as claimed in claim 1, which further comprises the step of compressing the peripheral portion (10b), after forming the hollow preform (5') and prior to supplying the fluid under pressure, in such a manner that the plastic material thereof flows towards the sidewall portion (5'b), and simultaneously further introducing the first plunger (1) and the second plunger (2) into the die cavity (3b), thereby to form additionally the upper portion of the sidewall portion (5'b) of the hollow preform (5').

9. A method of making a plastic hollow article (5) as claimed in claim 1, wherein, while the hollow preform (5') is formed, the sidewall portion (5'b) is kept in contact with the side surface (1b) of the first plunger (1) kept at about molecularly orientable temperature; and said supplying of said fluid under pressure is performed while the first plunger (1) is withdrawing to a position where the bottom surface (1a) thereof is approximately below the flange portion of the hollow preform (5').

10. A method of making a plastic hollow article (5) as claimed in any one of claims 1 to 9, wherein the plastic material stock (10) is composed of plastic sheets (100a; 102) of the same kind placed one over another.

11. A method making a plastic hollow article (5) as claimed in any one of claims 1 to 9, wherein the plastic material stock (10) is composed of plastic sheets (100a, 100b, 100c; 101, 100c;) of different kinds placed one over another.

12. A method of making a plastic hollow article (5) as claimed in any one of claims 1 to 9, wherein the plastic material stock (10) is at normal room temperature prior to clamping the peripheral portion (10b) thereof.

13. A method of making a plastic hollow article (5) as claimed in any one of claims 1 to 9, wherein the side surface (1b) and the bottom surface (1a) of the first plunger (1) are kept, during said introducing into the die cavity (3b), at a temperature lower than a temperature higher by 60°C than the upper limit of the molecularly orientable temperatures, and higher than a temperature lower by about 20°C than the lower limit of said molecularly orientable temperatures.

14. A method of making a plastic hollow article (5) as claimed in any one of claims 1 to 9, wherein the inner surface (3b₁) of the die cavity (3b) and the top surface (2a) of the second plunger (2) are kept at temperatures lower by about 20 to 50°C than the lower limit of the molecularly orientable temperatures.

**Revendications**

1. Procédé de fabrication d'un article creux (5) en matière plastique présentant un rebord (5a), une paroi latérale (5b) et une paroi inférieure (5c), la paroi latérale (5b) au moins étant à orientation moléculaire, le procédé comprenant les étapes suivantes: blocage d'une partie périphérique (10b) contre une surface (3c) de matrice qui s'étend globalement radialement . à partir de l'extrémité ouverte d'une cavité (3b) d'une matrice (3), la partie périphérique (10b) correspondant au rebord (5a) d'une charge (10) de matière plastique susceptible d'orientation moléculaire dont la température est plus basse que la limite supérieure des températures permettant l'orientation moléculaire de la matière plastique; introduction de la partie centrale (10a) de la charge (10) de matière plastique dans la cavité (3b) de la matrice, tandis que cette partie centrale (10a) est mise sous compression au moyen d'un premier piston plongeur (1) et d'un second piston plongeur (2) antagoniste du premier piston plongeur, de façon à former une préforme creuse (5') comportant une paroi latérale (5'b) constituée de la matière plastique qui a été chassée de la zone séparant le premier piston plongeur (1) du second piston plongeur (2), la partie centrale (10a) correspondant sensiblement à la paroi inférieure (5c), la cavité (3b) de matrice ayant une surface interne sensiblement droite s'étendant axialement, un jeu existant entre ladite surface interne et la surface latérale du premier piston plongeur (1), lequel jeu est plus grand que l'épaisseur de la paroi latérale (5'b) de la préforme creuse (5'); envoi d'un fluide sous pression dans la préforme creuse (5') pour dilater radialement la paroi latérale (5'b) de telle façon que la paroi latérale (5'b) soit amenée au contact de la surface interne (3b₁) de la cavité (3b) de matrice maintenue à une température plus basse que la limite inférieure desdites températures permettant l'orientation moléculaire afin de refroidir et de solidifier, en sorte que la paroi latérale (5b) de l'article creux (5) de matière plastique est formée à partir de la paroi latérale (5'b) de la préforme creuse (5'), caractérisé par le fait que la charge (10) de matière plastique est plate et d'épaisseur sensiblement régulière; ladite introduction est effectuée de telle façon que la force de compression du premier piston plongeur (1) et du second piston plongeur (2) est maintenue à une valeur relativement élevée au stade initial de l'introduction de la charge (10) de matière plastique dans la cavité (3b) de matrice, pour que la matière plastique soit ainsi chassée en remplissant sensiblement l'espace séparant le premier piston plongeur (1) de la surface interne (3b₁) de la cavité (3b) de matrice, et qu'ensuite la force de compression est réduite et ladite introduction est poursuivie, pour permettre ainsi à la matière plastique (5'b') ayant rempli l'espace d'être étirée en sens axial au moyen du premier piston plongeur (1).

2. Procédé de fabrication d'un article creux (5) en matière plastique comme revendiqué dans la revendication 1, qui comprend de plus l'étape consistant à comprimer la partie périphérique (10b) avant l'introduction de la partie centrale (10a) dans la cavité (3b) de matrice de telle manière que la matière plastique de la partie périphérique (10b) flue sensiblement radialement vers l'extérieur, en sorte que soit formé un rebord mince (5a₁, 5a₂).

3. Procédé de fabrication d'un article creux (5) en matière plastique comme revendiqué dans la revendication 1, qui comprend de plus l'étape consistant à comprimer la partie périphérique (10b) avant l'introduction de la partie centrale (10a) dans la cavité (3b) de matrice de telle manière que la matière plastique de la partie périphérique (10b) flue sensiblement radialement vers l'extérieur, en sorte que soit formé un rebord ($5a_3$) dont la coupe a une configuration prédéterminée.

4. Procédé de fabrication d'un article creux (5) en matière plastique comme revendiqué dans la revendication 1, qui comprend de plus l'étape consistant à comprimer la partie périphérique (10b) pendant l'introduction de la partie centrale (10a) dans la cavité (3b) de matrice de telle manière que la matière plastique de la partie périphérique (10b) flue sensiblement radialement vers l'extérieur, en sorte que soit formé un rebord mince ($5a_1$, $5a_2$).

5. Procédé de fabrication d'un article creux (5) en matière plastique comme revendiqué dans la revendication 1, qui comprend de plus l'étape consistant à comprimer la partie périphérique (10b) pendant l'introduction de la partie centrale (10a) dans la cavité (3b) de matrice de telle manière que la matière plastique de la partie périphérique (10b) flue sensiblement radialement vers l'extérieur, en sorte que soit formé un rebord ($5a_3$) dont la coupe a une configuration prédéterminée.

6. Procédé de fabrication d'un article creux (5) en matière plastique comme revendiqué dans la revendication 1, qui comprend de plus l'étape consistant à comprimer la partie périphérique (10b), après formation de la préforme creuse (5') et avant· recul du premier piston plongeur (1) jusqu'à sa position initiale, de telle manière que la matière plastique de la partie périphérique (10b) flue sensiblement radialement vers l'extérieur, en sorte que soit formé un rebord mince ($5a_1$, $5a_2$).

7. Procédé de fabrication d'un article creux (5) en matière plastique comme revendiqué dans la revendication 1, qui comprend de plus l'étape consistant à comprimer la partie périphérique (10b), après formation de la préforme creuse (5') et avant recul du premier piston plongeur (1) jusqu'à sa position initiale, de telle manière que la matière plastique de la partie périphérique (10b) flue sensiblement radialement vers l'extérieur, en sorte que soit formé un rebord ($5a_3$) dont la coupe a une configuration prédéterminée.

8. Procédé de fabrication d'un article creux (5) en matière plastique comme revendiqué dans la revendication 1, qui comprend de plus l'étape consistant à comprimer la partie périphérique (10b), après formation de la préforme creuse (5') et avant l'envoi du fluide sous pression, de telle manière que sa matière plastique flue vers la paroi latérale (5'b), et simultanément à introduire davantage le premier piston plongeur (1) et le second piston plongeur (2) dans la cavité (3b) de matrice, pour former ainsi davantage la partie supérieure de la paroi latérale (5'b) de la préforme creuse (5').

9. Procédé de fabrication d'un article creux (5) en matière plastique comme revendiqué dans la revendication 1, dans lequel, pendant qu'est formée la préforme creuse (5'), la paroi latérale (5'b) est maintenue au contact de la surface latérale (1b) du premier piston plongeur (1) maintenue au voisinage d'une température permettant l'orientation moléculaire; et ledit envoi dudit fluide sous pression est effectué pendant que le premier piston plongeur (1) est reculé jusqu'à une position où sa surface inférieure (1a) se trouve approximativement en dessous de rebord de la préforme creuse (5').

10. Procédé de fabrication d'un article creux (5) en matière plastique comme revendiqué dans l'une quelconque des revendications 1 à 9, dans lequel la charge (10) de matière plastique est composée de feuilles (100a; 102) de matière plastique de même nature disposées les unes au-dessus des autres.

11. Procédé de fabrication d'un article creux (5) en matière plastique comme revendiqué dans l'une quelconque des revendications 1 à 9, dans lequel la charge· (10) de matière plastique est composée de feuilles (100a, 100b, 100c; 101, 100c) de matière plastique de natures différentes disposées les unes au-dessus des autres.

12. Procédé de fabrication d'un article creux (5) en matière plastique comme revendiqué dans l'un quelconque des revendications 1 à 9, dans lequel la charge (10) de matière plastique est à température ambiante normale avant le blocage des sa partie périphérique (10b).

13. Procédé de fabrication d'un article creux (5) en matière plastique comme revendiqué dans l'une quelconque des revendications 1 à 9, dans lequel la surface latérale (1b) et la surface inférieure (1a) du premier piston plongeur (1) sont maintenues, pendant ladite introduction dans la cavité (3b) de matrice, à une température plus basse qu'une température supérieure de 60°C à la limite supérieure des températures permettant l'orientation moléculaire, et plus haute qu'une température inférieure d'environ 20°C à la limite inférieure desdites températures permettant l'orientation moléculaire.

14. Procédé de fabrication d'un article creux (5) en matière plastique comme revendiqué dans l'une quelconque des revendications 1 à 9, dans lequel la surface interne ($3b_1$) de la cavité (3b) de matrice et la surface supérieure (2a) du second piston plongeur (2) sont maintenues à des températures inférieures d'environ 20 à 50°C à la limite inférieure des températures permettant l'orientation moléculaire.

**Patentansprüche**

1. Verfahren zur Herstellung eines Kunststoff-Hohlkörpers (5) mit einem Flanschteil (5a), einem Seitenwandteil (5b) und einem Bodenwandteil (5c), wobei wenigstens der Seitenwandteil (5b) molekular orientiert ist, umfassend die Schritte: Festlegen eines Umfangsabschnitts (10b) an einer Werkzeugfläche (3c), die allgemein radial vom offenen Ende eines Hohlraums (3b) eines Werkzeugs (3) ausgeht; wobei der Umfangsabschnitt (10b) dem Randabschnitt (5a) eines molekular orientierbaren Kunststoffguts (10) mit einer Temperatur unterhalb der Obergrenze der Molekü16rientierungs-Temperaturen des Kunststoffguts entspricht; Einbringen des mittleren Abschnitts (10a) des Kunststoffguts (10) in den Werkzeughohlraum (3b) unter Kompression des mittleren Abschnitts (10a) mit einem ersten Stößel (1) und einem dazu entgegengesetzten zweiten Stößel (2) unter Bildung eines hohlen Vorformlings (5') mit einem Seitenwandabschnitt (5'b) aus dem Kunststoffmaterial, das zwischen dem ersten Stößel (1) und dem zweiten Stößel (2) ausgepreßt wurde, wobei der mittlere Abschnitt (10a) im wesentlichen dem Bodenwandteil (5c) entspricht und wobei der Werkzeughohlraum (3b) eine im wesentlichen gerade, in Axialrichtung sich erstreckende Innenfläche hat mit einem Spielraum zwischen der Innenfläche und einer Seitenfläche des ersten Stößels (1), der größer als die Dicke des Seitenwandteils (5'b) des hohlen Vorformlings (5') ist; und Zuführen eines Druckfluids in den hohlen Vorformling (5') unter radialer Aufweitung des Seitenwandteils (5'b), so daß der Seitenwandteil (5'b) zur Kühlung und Erhärtung in Kontakt mit der Innenfläche ($3b_1$) des Werkzeughohlraums (3b) gebracht wird, die auf einer Temperatur unterhalb der Untergrenze der Molekülorientierungs-Temperaturen gehalten ist, wodurch der Seitenwandteil (5b) des Kunststoff-Hohlkörpers (5) aud aus dem Seitenwandteil (5'b) des hohlen Vorformlings (5') geformt wird, dadurch gekennzeichnet, daß das Kunststoffgut (10) flach ist und eine im wesentlichen gleichmäßige Dicke hat; daß das Einbringen so erfolgt, daß die Kompressionskraft des ersten Stößels (1) und des zweiten Stößels (2) in der Anfangsphase des Einbringens des Kunststoffguts (10) in den Werkzeughohlraum (3b) vergleichsweise hoch gehalten wird, so daß das Kunststoffmaterial so herausgepreßt wird, daß es den Raum zwischen dem ersten Stößel (1) und der Innenfläche ($3b_1$) des Werkzeughohlraums (3b) im wesentlichen ausfüllt, und daß anschließend die Kompressionskraft verringert und das Einbringen fortgesetzt wird, so daß der eingefüllte Kunststoff (5'b) mit dem ersten Stößel (1) in Axialrichtung gezogen werden kann.

2. Verfahren zur Herstellung eines Kunststoff-Hohlkörpers (5) nach Anspruch 1, wobei ferner der Schritt vorgesehen ist, daß der Randteil (10b) vor dem Einbringen des zentralen Teils (10a) in den Werkzeughohlraum (3b) in solcher Weise komprimiert wird, daß der Kunststoff des Randteils (10b) im wesentlichen nach radial außen fließt, so daß ein dünner Flanschteil ($5a_1$, $5a_2$) geformt wird.

3. Verfahren zur Herstellung eines Kunststoff-Hohlkörpers (5) nach Anspruch 1, wobei ferner der Schritt vorgesehen ist, daß der Randteil (10b) vor dem Einbringen des zentralen Teils (10a) in den Werkzeughohlraum (3b) in solcher Weise komprimiert wird, daß der Kunststoff des Randteils (10b) im wesentlichen nach radial außen fließt, so daß ein Flanschteil ($5a_3$) mit vorbestimmter Profilkonfiguration geformt wird.

4. Verfahren zur Herstellung eines Kunststoff-Hohlkörpers (5) nach Anspruch 1, wobei ferner der Schritt vorgesehen ist, daß der Randteil (10b) während des Einbringens des zentralen Teils (10a) in den Werkzeughohlraum (3b) in solcher Weise komprimiert wird, daß der Kunststoff des Randteils (10b) im wesentlichen nach radial außen fließt, so daß ein dünner Flanschteil ($5a_1$, $5a_2$) geformt wird.

5. Verfahren zur Herstellung eines Kunststoff-Hohlkörpers (5) nach Anspruch 1, wobei ferner der Schritt vorgesehen ist, daß der Randteil (10b) während des Einbringens des zentralen Teils (10a) in den Werkzeughohlraum (3b) in solcher Weise komprimiert wird, daß der Kunststoff des Randteils (10b) im wesentlichen nach radial außen fließt, wodurch ein Flanschteil ($5a_3$) mit vorbestimmter Profilkonfiguration geformt wird.

6. Verfahren zur Herstellung eines Kunststoff-Hohlkörpers (5) nach Anspruch 1, wobei ferner der Schritt vorgesehen ist, daß der Randteil (10b) nach den Formen des hohlen Vorformlings (5') und vor dem Zurückziehen des ersten Stößels (1) in dessen Ausgangsstellung in solcher Weise komprimiert wird, daß der Kunststoff des Randteils (10b) im wesentlichen nach radial außen fließt, so daß ein dünner Flanschteil ($5a_1$, $5a_2$) geformt wird.

7. Verfahren zur Herstellung eines Kunststoff-Hohlkörpers (5) nach Anspruch 1, wobei ferner der Schritt vorgesehen ist, daß der Randteil (10b) nach dem Formen des hohlen Vorformlings (5') und vor dem Zurückziehen des ersten Stößels (1) in dessen Ausgangsstellung in solcher Weise komprimiert wird, daß der Kunststoff des Randteils (10b) im wesentlichen nach radial außen fließt, so daß ein Flanschteil ($5a_3$) mit vorbestimmter Profilkonfiguration geformt wird.

8. Verfahren zur Herstellung eines Kunststoff-Hohlkörpers (5) nach Anspruch 1, wobei ferner der Schritt vorgesehen ist, daß der Randteil (10b) nach dem Formen des hohlen Vorformlings (5') und vor der Zufuhr von Druckfluid in solcher Weise komprimiert wird, daß sein Kunststoffmaterial in Richtung zum Seitenwandteil (5'b) fließt, und daß gleichzeitig der erste Stößel (1) und der zweite Stößel (2) in den Werkzeughohlraum (3b) eingeführt werden, so daß zusätzlich der obere Abschnitt des Seitenwandteils (5'b) des hohlen Vorformlings (5') geformt wird.

9. Verfahren zur Herstellung eines Kunststoff-Hohlkörpers (5) nach Anspruch 1, wobei während des Formens des hohlen Vorformlings (5') der Seitenwandteil (5'b) in Kontakt mit der etwa auf Molekülorientierungs-Temperatur gehaltenen Seitenfläche (1b) des ersten Stößels (1) gehalten wird; und wobei die Zufuhr des Druckfluids durchgeführt wird, während der erste Stößel (1) in eine Stellung zurückgezogen ist, in der seine Bodenfläche (1a) ungefähr unter dem Flanschteil des hohlen Vorformlings (5') liegt.

10. Verfahren zur Herstellung eines Kunststoff-Hohlkörpers (5) nach einem der Ansprüche 1—9, wobei das Kunststoffgut (10) aus übereinander angeordneten Kunststoff-Folien (100a; 102) gleicher Art besteht.

11. Verfahren zur Herstellung eines Kunststoff-Hohlkörpers (5) nach einem der Ansprüche 1—9, wobei das Kunststoffgut (10) aus übereinander angeordneten Kunststoff-Folien (100a, 100b, 100c; 101, 100c;) unterschiedlicher Art besteht.

12. Verfahren zur Herstellung eines Kunststoff-Hohlkörpers (5) nach einem der Ansprüche 1—9, wobei das Kunststoffgut (10) vor dem Festlegen seines Randabschnitts (10b) normale Raumtemperatur hat.

13. Verfahren zur Herstellung eines Kunststoff-Hohlkörpers (5) nach einem der Ansprüche 1—9, wobei die Seitenfläche (1b) und die Bodenfläche (1a) des ersten Stößels (1) während des Einbringens in den Werkzeughohlraum (3b) auf einer Temperatur gehalten werden, die niedriger als eine um 60°C über der Obergrenze von Molekülorientierungs-Temperaturen liegende Temperatur und höher als eine um ca. 20°C unter der Untergrenze der Molekülorientierungs-Temperaturen liegende Temperatur ist.

14. Verfahren zur Herstellung eines Kunststoff-Hohlkörpers (5) nach einem der Ansprüche 1—9, wobei die Innenfläche (3b$_1$) des Werkzeughohlraums (3b) und die Oberseite (2a) des zweiten Stößels (2) auf Temperaturen gehalten werden, die um ca. 20—50°C unter der Untergrenze der Molekülorientierungs-Temperaturen liegen.

# F I G. 1

F I G. 2

F I G. 3

# F I G. 4

# F I G. 5

# F I G. 6

# F I G. 7

# F I G. 8

# F I G. 9(a)

100a
100b
100c
100b
100a

10

# F I G. 9(b)

101
100a
100b
100c
100b
100a

10

101

# F I G. 9(c)

102
100a
100b
100c
100b

102
100c  100a  100b
100a

10
100b  100a  100a
100b

102
100c
100a  100b

# F I G. 9(d)

100a
100a
100a

10

8

# F I G. 10(a)

# F I G. 10(b)

# FIG.11(a)

# FIG.11(b)

# F I G.12 (a)　　F I G.12 (b)